(19) Europäisches Patentamt
European Patent Office
Office européen des brevets

(11) EP 2 691 345 B1

(12) **EUROPEAN PATENT SPECIFICATION**

(45) Date of publication and mention of the grant of the patent:
**18.05.2016 Bulletin 2016/20**

(21) Application number: **12714112.5**

(22) Date of filing: **22.03.2012**

(51) Int Cl.:
***C03C 25/24*** *(2006.01)* ***C03C 25/26*** *(2006.01)*
***C03C 25/40*** *(2006.01)* ***C08J 5/08*** *(2006.01)*

(86) International application number:
**PCT/US2012/030024**

(87) International publication number:
**WO 2012/134924 (04.10.2012 Gazette 2012/40)**

# (54) FIBER GLASS STRANDS AND REINFORCED PRODUCTS COMPRISING THE SAME

GLASFASERSTRÄNGE UND VERSTÄRKTE PRODUKTE DAMIT

FILS EN FIBRES DE VERRE ET PRODUITS RENFORCÉS LES COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.03.2011 US 201113075640**

(43) Date of publication of application:
**05.02.2014 Bulletin 2014/06**

(73) Proprietor: **PPG Industries Ohio, Inc.**
**Cleveland, OH 44111 (US)**

(72) Inventors:
- **VAN DER WOUDE, Jacobus, Hendricus, Antonius**
**NL-9351 JL Leek (NL)**
- **DIJT, Jacob, Cornelis**
**NL-9761 JL Eelde (NL)**
- **PENNING, John, Theo**
**NL-9482 PA Tynaarlo (NL)**
- **BOELMAN, Ronald**
**NL-9501 KJ Stadskanaal (NL)**
- **TABAK, Johannes, Leonardus**
**NL-9732 CL Groningen (NL)**
- **BOWLAND, Creig, Dean**
**Shelby, North Carolina 28150 (US)**

(74) Representative: **f & e patent**
**Fleischer, Engels & Partner mbB, Patentanwälte**
**Braunsberger Feld 29**
**51429 Bergisch Gladbach (DE)**

(56) References cited:
**WO-A1-2009/062137**
**FR-A1- 2 920 763**
**US-A- 5 736 246**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 691 345 B1

## Description

### FIELD OF THE INVENTION

The present invention relates to sizing compositions for glass fibers, sized glass fibers, fiber glass strands, and articles reinforced with sized glass fibers.

### BACKGROUND OF THE INVENTION

A sizing composition operable to impart desired properties is typically applied to glass fibers subsequent to glass fiber formation. As used herein, the terms "sizing composition," "sizing," "binder composition," "binder," or "size" refer to a coating composition applied to the filaments after forming. In some embodiments, a sizing composition is applied to the filaments immediately after forming. Sizing compositions may provide protection through subsequent processing steps, such as those where the fibers pass by contact points as in the winding of the fibers and strands onto a forming package, drying the aqueous-based or solvent-based sizing composition to remove the water or solvent, twisting from one package to a bobbin, beaming to place the yarn onto very large packages ordinarily used as the warp in a fabric, chopping in a wet or dry condition, roving into larger bundles or groups of strands, unwinding for use as a reinforcement, and other downstream processes.

In addition, sizing compositions can play a dual role when placed on fibers that reinforce polymeric matrices in the production of composites and other products. In some applications, the sizing composition can provide protection and also can provide compatibility between the fiber and the matrix polymer or resin. For example, in some applications, glass fibers in the forms of woven and nonwoven fabrics, mats, rovings, and chopped strands have been compounded with resins, such as thermosetting and thermoplastic resins.

WO 2009/062137 discloses sizing compositions comprising an acid-amine component for application to glass fibers and polymeric resins reinforced with glass fibers at least partially coated with said sizing compositions.

### SUMMARY

Embodiments of the present invention relate to aqueous sizing compositions for glass fibers. Moreover, embodiments of the present invention additionally relate to fiber glass strands comprising at least one glass fiber at least partially coated with an aqueous sizing composition of the present invention. Fiber glass strands at least partially coated with an aqueous sizing composition of the present invention can be used in encapsulation, impregnation, and reinforcement applications for a variety of resins, including thermoplastic and/or thermoset resins.

Embodiments of the present invention provide an aqueous sizing composition comprising an acid-amine component, the acid-amine component comprising molecules of at least one amine associated with molecules of at least one phosphorus-containing acid and/or sulfur containing acid. In some embodiments, the molecules of the at least one amine are associated with the molecules of the at least one phosphorus-containing acid or sulfur-containing acid through Lewis acid-base interactions.

In some embodiments, an amine of an acid-amine component comprises one or more amine chemical species generally used in sizing compositions for glass fibers including, but not limited to, aminosilane coupling agents and amine lubricants. In some embodiments, an amine of an acid-amine component comprises imidazolines, alkylimidazolines, ethoxylate amine oxides, polyamino fatty acid derivatives, or mixtures thereof.

Moreover, a phosphorus-containing acid of an acid-amine component, in some embodiments, comprises phosphorous acid, hypophosphorus acid, phosphonic acid, organophosphorus acids, phosphoric acid or mixtures thereof. Additionally, a sulfur-containing acid, in some embodiments, comprises sulfonic acid, organosulfonic acids, hydrogen sulfite, sulfurous acid, sulfuric acid or mixtures thereof. In some embodiments, a phosphorus-containing acid or a sulfur-containing acid can comprise the acid forms of the stabilizers set forth in United States Patent 6,207,737 to Schell et al.,

Molecules of at least one amine, according to some embodiments of the present invention, are associated with molecules of at least one phosphorus-containing acid and/or sulfur-containing acid through electrostatic interactions, covalent bonds, dipole interactions, hydrogen bonds or van der Waals interactions or combinations thereof. In some embodiments, molecules of at least one phosphorus-containing acid and/or sulfur containing acid at least partially neutralize molecules of the at least one amine. As a result, phosphorus-containing acids and/or sulfur-containing acids, in some embodiments, can assist in controlling the pH of aqueous sizing compositions of the present invention.

In some embodiments of an aqueous sizing composition of the present invention, an acid-amine component comprises molecules of at least one amine associated with molecules of at least one phosphorus-containing acid and/or sulfur-containing acid and at least one additional acid. The at least one additional acid, in some embodiments, is selected to neutralize amine functionalities of the amine molecules which are not associated with the phosphorus-containing acid or sulfur-containing acid. In neutralizing amine functionalities not associated with the phosphorus-containing acid or

sulfur-containing acid, the at least one additional acid can also assist in controlling the pH of the aqueous sizing composition.

In some embodiments, the at least one additional acid is selected according to the ability to neutralize amine functionalities and assist in providing the desired pH for the aqueous sizing composition. In one embodiment, the at least one additional acid comprises carboxylic acid. Carboxylic acids, according to some embodiments, can comprise alkanoic acids including, but not limited to, formic acid, acetic acid, propionic acid, butyric acid, valeric acid, caproic acid, enanthic acid, caprylic acid, pelargonic acid, capric acid, lauric acid, stearic acid, or mixtures thereof. Carboxylic acids, in other embodiments, can comprise unsaturated carboxylic acids, such as aromatic carboxylic acids, acrylic acids, or derivatives thereof. In some embodiments, carboxylic acids can comprise fatty acids or ketoacids such as a pyruvic acid and acetoacetic acid. In some embodiments, the at least one additional acid comprises carbonic acid, ascorbic acid, or mixtures thereof.

In another embodiment, the present invention provides a sizing composition comprising an acid-aminosilane component, the acid-aminosilane component comprising molecules of at least one aminosilane associated with molecules of at least one phosphorus-containing acid and/or sulfur containing acid. An aminosilane can comprise any aminosilane for use in sizing compositions known to one of skill in the art. In some embodiments, for example, an aminosilane can comprise aminopropyltrialkoxysilanes such as γ-aminopropyltrimethoxysilane and γ-aminopropyltriethoxysilane, β-aminoethyltriethoxysilane, N-β-aminoethylamino-propyltrimethoxysilane, 3-aminopropyldimethoxysilane, or mixtures thereof. Moreover, phosphorus-containing and sulfur-containing acids suitable for association with the at least one aminosilane are consistent with those described herein.

In some embodiments, an acid-aminosilane component comprises molecules of at least one aminosilane associated with molecules of at least one phosphorus-containing acid and/or sulfur containing acid and at least one additional acid. In some embodiments, at least one additional acid comprises carboxylic acids as described herein.

In some embodiments, an acid-amine component, such as an acid-aminosilane, can impart desirable film-forming properties to the sizing composition such that the amount of a separate film forming component can be eliminated or substantially reduced in the sizing composition. An acid-amine component can contribute to film build by providing higher molecular weight chemical species comprising molecules of at least one amine associated with molecules of at least one phosphorus-containing acid and/or sulfur-containing acid.

In some embodiments, nevertheless, a sizing composition of the present invention can further comprise at least one film former which supplements any film forming characteristics provided by the acid-amine component. In one embodiment, for example, a sizing composition comprises at least one film former and an acid-amine component, the acid-amine component comprising molecules of at least one amine associated with molecules of at least one phosphorus-containing acid and/or sulfur containing acid.

Alternatively, as acid-amine components can impart desirable film forming characteristics to sizing compositions of the present invention, in some embodiments, a sizing composition of the present invention does not comprise chemical species that primarily function as a film former. An acid-amine component can contribute to film build by providing higher molecular weight chemical species comprising molecules of at least one amine associated with molecules of at least one phosphorus-containing acid and/or sulfur-containing acid.

In some embodiments, sizing compositions of the present invention can further comprise one or more coupling agents, lubricants, biocides and/or anti-foaming agents. In some embodiments where the coupling agents and/or lubricants comprise amine functionalities, the coupling agents and/or lubricants are in addition to any aminosilane of aminofunctional lubricant participating in the formation of the acid-amine component.

Some embodiments of the present invention provide a fiber glass strand comprising at least one glass fiber at least partially coated with a sizing composition of the present invention. In some embodiments, a sizing composition of the present invention is a primary sizing. In other embodiments, a sizing composition of the present invention is a secondary sizing. The term "primary sizing" refers to a sizing composition applied to fibers immediately after formation of the fibers. The term "secondary sizing" refers to a composition applied to fibers after application of the primary sizing.

In some embodiments, for example, a sizing composition of the present invention comprising at least one film former and an acid-amine component is applied to at least one glass fiber as a primary sizing. A sizing composition comprising an acid-amine component without a separate film former is subsequently applied to the at least one glass fiber as a secondary sizing. Alternatively, in other embodiments, for example, a sizing composition of the present invention comprising an acid-amine component without a separate film former is applied to at least one glass fiber as a primary sizing, and a sizing composition of the present invention comprising an acid-amine component and at least one film former is subsequently applied to the at least one glass fiber as a secondary sizing.

Embodiments of the present invention contemplate use of any sizing composition described herein as a primary sizing or a secondary sizing. In some embodiments wherein a primary sizing comprises an acid-amine component, a secondary sizing subsequently applied does not comprise an acid-amine component. Moreover, in some embodiments wherein a secondary sizing comprises an acid-amine component, the primary sizing applied to a glass fiber does not comprise an acid-amine component.

Some embodiments of fiber glass strands comprising at least one fiber at least partially coated with a sizing composition of the present invention can comprise continuous strands or chopped strands. Moreover, continuous fiber glass strands, according to some embodiments, can be wound into a single package such as a forming package or a direct draw package.

In some embodiments, fiber glass strands of the present invention comprise glass fibers having a diameter of at least 21 microns. Fiber glass strands, in some embodiments, fiber glass strands comprise glass fibers having a diameter of up to about 35 microns. In some embodiments, fiber glass strands comprise glass fibers having a diameter of at least about 22 microns. Fiber glass strands, in some embodiments, comprise glass fibers having a nominal diameter of about 24 microns. In some embodiments, fiber glass stands comprising larger diameter fibers (e.g., greater than about 21 microns) can be used as reinforcement in a composite and can result in a composite advantageously having physical properties comparable to composites reinforced with smaller diameter fibers.

In another aspect, the present invention provides fiber glass reinforced thermoplastic or thermoset composites. In some embodiments, a glass fiber reinforced thermoplastic or thermoset composite comprises a thermoplastic resin or thermoset resin and at least one glass fiber at least partially coated with a sizing composition of the present invention. As provided herein, glass fibers at least partially coated with a sizing composition of the present invention can have any desired length. In some embodiments, glass fibers at least partially coated with a sizing composition of the present invention have dimensions suitable for use in long fiber reinforcement applications including G-LFT (Granular-Long Fiber Thermoplastic) and D-LFT (Direct-Long Fiber Themoplastic).

Any desired thermoplastic or thermoset resin can be used with glass fibers at least partially coated with a sizing composition of the present invention. In some embodiments, thermoplastic resins reinforced with glass fibers of the present invention can comprise polyolefins such as polyethylene and polypropylene, polyamides, polyphenylene oxide, polystyrenics, or polyesters such as polybutylene terephthalate (PBT) and polyethylene terephthalate (PET). In some embodiments, thermoset resins reinforced with glass fibers of the present invention comprise polyester resins, polyimide resins, phenolic resins, and epoxy resins.

In a further embodiment, the present invention provides methods of making a glass fiber reinforced thermoplastic or thermoset composite. In one embodiment, a method of making a glass fiber reinforced thermoplastic or thermoset composite comprises providing a plurality of glass fibers, at least partially coating the plurality of glass fibers with a sizing composition of the present invention, and disposing the plurality of coated glass fibers in a thermoplastic or thermoset resin. As provided herein, glass fibers can be assembled into continuous fiber glass strands. The fiber glass strands can be chopped, remain continuous, or be assembled into rovings for reinforcement applications.

These and other embodiments are described in greater detail in the Detailed Description that follows.

## DETAILED DESCRIPTION

For the purposes of this specification, unless otherwise indicated, all numbers expressing quantities of ingredients, reaction conditions, and so forth used in the specification are to be understood as being modified in all instances by the term "about." Accordingly, unless indicated to the contrary, the numerical parameters set forth in the following specification are approximations that can vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more, e.g. 1 to 6.1, and ending with a maximum value of 10 or less, e.g., 5.5 to 10. Additionally, any reference referred to as being "incorporated herein" is to be understood as being incorporated in its entirety.

It is further noted that, as used in this specification, the singular forms "a," "an," and "the" include plural referents unless expressly and unequivocally limited to one referent.

Some embodiments of the present invention relate to new sizing compositions for glass fibers. The sizing compositions described herein generally relate to aqueous sizing compositions. Some embodiments of sizing compositions of the present invention are compatible with a variety of resins, including thermosetting resins, thermoplastic resins, and/or other polymeric resins. Some embodiments of the present invention also relate to fiber glass strands coated with sizing compositions. Additionally, some embodiments of the present invention relate to products that incorporate fiber glass strands, such as fiber reinforced polymeric materials.

The present invention will be discussed generally in the context of its use in the production, assembly, and application of glass fibers. However, one of ordinary skill in the art would understand that the present invention may be useful in the processing of other textile materials.

Some embodiments of fiber glass strands of the present invention can have various properties. For example, some embodiments of fiber glass strands can be at least partially coated with a sizing composition of the present invention resulting in the at least partially coated fiber glass strands being compatible with a number of resins while exhibiting acceptable levels of broken filaments, desirable abrasion resistance, and/or desirable strand integrity, as well as other properties.

In some embodiments, the present invention provides a sizing composition comprising an acid-amine component, the acid-amine component comprising molecules of at least one amine associated with molecules of at least one phosphorus-containing acid and/or sulfur-containing acid. In some embodiments, the molecules of the at least one amine are associated with the molecules of the at least one phosphorus-containing acid or sulfur-containing acid through Lewis acid-base interactions.

The amine of an acid-amine component, in some embodiments, comprises any amine having one or more amine groups operable to form an association with a phosphorus-containing acid or sulfur-containing acid. In some embodiments, an amine comprises a primary amine, secondary amine or tertiary amine or mixtures thereof.

In some embodiments, the amine of an acid-amine component comprises one or more amine chemical species generally used in sizing compositions for glass fibers including aminosilane coupling agents and amine lubricants. In some embodiments, the amine of an acid-amine component comprises aminosilanes, imidazolines, alkylimidazolines, ethoxylate amine oxides, polyethylenimine, polyamino fatty acid derivatives, or mixtures thereof. Suitable aminosilanes can comprise any aminosilane for use in sizing compositions known to one of skill in the art. In one embodiment, for example, an aminosilane can comprise aminopropyltrialkoxysilanes such as $\gamma$-aminopropyltrimethoxysilane and $\gamma$-aminopropyltriethoxysilane, $\beta$-aminoethyltriethoxysilane, N-$\beta$-aminoethylamino-propyltrimethoxysilane, 3-aminopropyldimethoxysilane, or mixtures thereof.

The acid of an acid-amine component, in some embodiments, can comprise a phosphorus-containing acid. The phosphorus atom of a phosphorus-containing acid, in some embodiments, can be in any one of oxidation states 3, 4, or 5. In other embodiments, the phosphorus atom of a phosphorus-containing acid is not in the highest oxidation state of 5. A phosphorus-containing acid, in some embodiments, comprises phosphorus acid, hypophosphorus acid, hypophosphoric acid, phosphonic acid, phosphoric acid or organophosphorus acids.

Organophosphorus acids suitable for use in some embodiments of the present invention can comprise those of Formula (I)

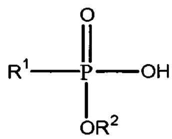

(I)

wherein $R^1$ is -alkyl, -alkenyl, -alkynyl, -cycloalkyl, -cycloalkenyl, -heterocycl, -aryl, or -heteroaryl and $R^2$ is -hydrogen, -alkyl, -alkenyl, -alkynyl, -cycloalkyl, -cycloalkenyl, -heterocycl, -aryl, or -heteroaryl.

In another embodiment, organophosphorus acids suitable for use in some embodiments of the present invention can comprise those of Formula (II)

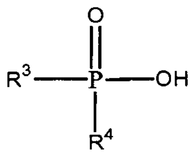

(II)

wherein $R^3$ and $R^4$ are independently selected from the group consisting of -hydrogen, -alkyl, -alkenyl, -alkynyl, -cycloalkyl, -cycloalkenyl, -heterocycl, -aryl, or -heteroaryl.

Organophosphorus acids, in some embodiments, can comprise phenylphosphinic acid, diphenylphosphinic acid, 4-methoxyphenyl phosphonic acid, 4-hydroxyphenyl phosphonic acid, 4-hydroxybutyl phosphonic acid, benzylhydrylphosphonic acid, benzylphosphonic acid, butylphosphonic acid, dodecylphosphonic acid, heptadecylphosphonic acid, methylbenzylphosphonic acid, naphthylmethylphosphonic acid, octadecylphosphonic acid, octylphosphonic acid, pentylphosphonic acid, phenylphosphonic acid, styrenephosphonic acid, or mixtures thereof.

In some embodiments, the acid of an acid-amine component can comprise a sulfur-containing acid. The sulfur

atom of a sulfur-containing acid, in some embodiments, can be in any one of oxidation states 2, 4, or 6. In other embodiments, the sulfur atom of a sulfur-containing acid is not in the highest oxidation state of 6. A sulfur-containing acid, in one embodiment, comprises sulfonic acid, organosulfonic acids, hydrogen sulfite, sulfurous acid, sulfuric acid or mixtures thereof.

In some embodiments, an acid-amine component comprises molecules of at least one amine associated with molecules of at least one phosphorus-containing acid and/or sulfur-containing acid and at least one additional acid. In some embodiments, the at least one additional acid comprises a carboxylic acid as describer herein.

Molecules of at least one amine, according to some embodiments of the present invention, are associated with molecules of at least one phosphorus-containing acid and/or sulfur-containing acid through electrostatic interactions, covalent bonds, hydrogen bonds, dipole interactions or van der Waals interactions or combinations thereof. In one embodiment, for example, molecules of at least one amine are associated with molecules of at least one phosphorus-containing acid through electrostatic interactions as shown in Formula (III).

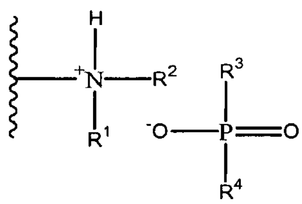

(III)

wherein $R^1$ through $R^4$ are independently selected from the group consisting of -hydrogen, -alkyl, -alkenyl, -alkynyl, -cycloalkyl, -cycloalkenyl, -heterocycl, -aryl, or -heteroaryl. While not wishing to be bound by any theory, it is believed that the phosphorus-containing acid provides an electrophilic hydrogen ion to the amine group to neutralize the amine group in a Lewis acid-base interaction. The transfer of the hydrogen places a positive charge on the nitrogen of the amine group thereby facilitating the formation of an electrostatic interaction with the dissociated phosphorus-containing acid. In neutralizing the basicity of amine functionalities, phosphorus-containing and/or sulfur-containing acid molecules can assist in controlling the pH of the aqueous sizing composition.

In some embodiments, an amine molecule of an acid-amine complex comprises a single amine functionality for association with a phosphorus-containing acid or a sulfur-containing acid. In some embodiments, an amine molecule comprises a plurality of amine functionalities for association with one or a plurality of phosphorus-containing acid and/or sulfur-containing acid molecules.

In some embodiments, for example, molecules of a phosphorous-containing and/or a sulfur-containing acid neutralize substantially all of the amine functionalities of the amine molecules. In other embodiments, molecules of a phosphorus-containing acid and/or a sulfur containing acid neutralize less than substantially all of the amine functionalities of the amine molecules.

In some embodiments, a sizing composition of the present invention comprises stoichiometric ratios of molecules of a phosphorus-containing acid and/or a sulfur-containing acid to amine molecules. In other embodiments, a sizing composition of the present invention comprises non-stoichiometric ratios of molecules of a phosphorus-containing acid and/or a sulfur-containing acid to amine molecules.

In some embodiments, the molar ratio of molecules of phosphorus-containing acid and/or sulfur-containing acid to amine molecules is based on the molar quantity of amine functional groups present in the amine molecules. In such embodiments, for example, the molar ratio of phosphorus-containing acid and/or sulfur containing acid to amine is determined according to Formula (IV):

$$\frac{\text{(moles phosphorus-containing acid + moles sulfur-containing acid)}}{\text{(moles amine functional groups)}}$$

(IV)

In some embodiments, a molar ratio determined according to Formula (IV) is less than about 1. In some embodiments, a molar ratio determined according to Formula (IV) is less than about 0.75 or less than about 0.5. In some embodiments, a molar ratio determined according to Formula (IV) is less than about 0.25 or less than about 0.10. In other embodiments, a molar ratio determined according to Formula (IV) is greater than about 1. In one embodiment, a molar ratio determined according to Formula (IV) is greater than about 2 or greater than about 3.

In the operation of Formula (IV), for example, an amine molecule can comprise two amine functional groups. Therefore, if one mole of amine molecules is provided in the sizing composition, two moles of amine functional groups are present. Moreover, if one mole of phosphorus-containing acid is added to the sizing composition comprising the amine molecules and no moles of sulfur-containing acid are added, Formula (IV) becomes (1+0)/2, which provides a molar ratio of phosphorus-containing acid to amine of 0.5.

A sizing composition, in some embodiments, comprises an acid-amine component in an amount up to about 100 weight percent on a total solids basis. A sizing composition can comprise an acid-amine component in an amount up to about 80 weight percent, in some embodiments, or up to about 60 weight percent on a total solids basis, in other embodiments. In some embodiments, a sizing composition comprises an acid-amine component in an amount greater than about 1 weight percent on a total solids basis. In some embodiments, a sizing composition comprises an acid-amine component in an amount greater than about 10 weight percent on a total solids basis. In one embodiment, a sizing composition comprises an acid-amine component in an amount greater than 40 weight percent on a total solids basis. In some embodiments, a sizing composition can comprise any amount of acid-amine component effective to impart the desired properties on the sizing composition.

As described herein, acid-amine component of an aqueous sizing composition, in some embodiments, comprises an acid-aminosilane component, the acid-aminosilane component comprising molecules of at least one aminosilane associated with molecules of at least one phosphorus-containing acid and/or sulfur-containing acid. Molecules of at least one aminosilane are associated with molecules of at least one phosphorus-containing acid and/or sulfur containing acid by electrostatic interactions, covalent bonds, dipole-dipole interactions, hydrogen bonds or van der Waals interactions or combinations thereof. In some embodiments, molecules of at least one aminosilane are at least partially neutralized by molecules of at least one phosphorus-containing acid and/or sulfur-containing acid in the formation of the acid-aminosilane component. In one embodiment, for example, a phosphorus-containing acid comprising the acid form of a stabilizer can at least partially neutralize an aminosilane in a manner consistent with that provided in Formula (III) above.

Non-limiting examples of commercially available aminosilanes include A-1100 γ-aminopropyltriethoxysilane, A-1120 N-(β-aminoethyl)-y-aminopropyltrimethoxysilane, and other aminofunctional silanes in the A-1100 series from OSi Specialties, as well as DYNASYLAN® AMEO 3-aminopropyltriethoxysilane from Degussa AG of Dusseldorf, Germany.

Sizing compositions of the present invention, in some embodiments, can further comprise at least one film former operable to supplement the film forming characteristics of the acid-amine component. In some embodiments, sizing compositions of the present invention can comprise a plurality of film formers. Any film former known to one of skill in the art not inconsistent with the objectives of the present invention can be used. Suitable film formers, in some embodiments, for example, can be compatible with one or more polymeric resins.

The selection of a film former may depend on the polymeric resin to be reinforced to enhance compatibility between the resin and glass fibers coated with a sizing composition comprising the film former. Additionally, selection of a film former may depend on the type of fiber to be sized.

A number of film formers can used in various embodiments of the present invention. Non-limiting examples of film formers for use in various embodiments of the present invention comprise chemically modified polyolefins, polyurethanes, epoxides, or mixtures or aqueous dispersions thereof. In some embodiments, a film former can comprise one or more polyacrylates, polyesters or poly(vinyl acetates).

A film former comprising a chemically modified polyolefin, in some embodiments, is provided as an aqueous emulsion. The term "chemically-modified polyolefin" refers to acid or acid anhydride modified polyolefins either amorphous or crystalline, such as those produced by the method detailed in United States Patent No. 3,416,990, United States Patent No. 3,437,550 and United States Patent No. 3,483,276. A discussion of these polyolefins, their modification and emulsification can be found in United States Patent No. 5,130,197.

An example of a crystalline carboxylated polypropylene polymer useful as a film former, in some embodiments of the present invention, is the HERCOPRIME® type resin commercially available from Hercules, Inc. of Bloomington, Del. An example of an amorphous carboxylated polypropylene polymer is EPOLENE® E-43 resin commercially available from the Westlake Chemical Corporation of Longview, TX. Another suitable film former material is an aqueous emulsion of the EPOLENE E-43 resin, commercially available from Byk-Cera under the trade designation Novacer 1841 emulsion. CHEMCOR 43C30 amorphous carboxylated polypropylene aqueous emulsion commercially available from Chemical Corporation of America is another example of a film former suitable for use in some embodiments. Another commercially available version of an aqueous polyolefin emulsion useful as a film former in some embodiments is the carboxylated amorphous polypropylene from National Starch, Procter Division, sold under the trade designation Protolube RL-5440 polypropylene emulsion. A further suitable film former is an aqueous emulsion of a high molecular weight maleic anhydride grafted polypropylene emulsion commercially available from DSM, B.V. of the Netherlands under the Neoxil 605 trade designation.

Suitable film formers for some embodiments comprise polyurethanes. Polyurethane film forming materials, in

some embodiments, are useful for polyamide resin reinforcement applications. In some embodiments, polyurethane film forming compositions are provided as aqueous dispersions such as, for example, the WITCOBOND® series provided by Crompton Corporation-Uniroyal Chemical, including, but not limited to, WITCOBOND® W-290H and WITCOBOND® W-296. Additional examples of commercially available polyurethane aqueous dispersions comprise Aquathane 516 from Reichhold Chemical Company and Hydrosize U2-01 from Hydrosize Technologies, Inc.

In some embodiments, polyurethane film formers comprise aqueous solutions of polyurethane polymers formed by a reaction between an organic isocyanate or polyisocyanate and an organic polyhydroxylated compound or hydroxyl terminated polyether or polyester polymer. The polyurethane dispersion may contain a crosslinking group, in some embodiments.

Another example of a suitable polyurethane is an aqueous emulsion of a polyether-polyurethane NAJ-1037 from Bayer Chemical. Further, the polyurethane may be part of a dispersion comprising a polyurethane and a blocked isocyanate. For example, the following polyurethane/blocked isocyanate emulsions may be suitable for use in the sizing compositions of the present invention: WITCOBOND 60X (Crompton), Baybond 403 (Bayer), Baybond PU-130 (Bayer), Baybond XP-7055 (Bayer), Nopco D641 (Henkel), Neoxil 6158 (DSM), and Vestanat EP-DS-1205 (Degussa).

In some embodiments of the present invention, the at least one film former can comprise epoxide compositions. Epoxide film forming materials, in some embodiments, are useful in polyethylene or polybutylene terephthalate reinforcement applications. Suitable epoxide compositions for use as film formers, according some embodiments, comprise EPON epoxides and EPI-REZ epoxides commercially available Hexion Specialty Chemicals of Columbus, Ohio.

Sizing compositions of the present invention, in some embodiments, comprise at least one film former in an amount up to about 85 weight percent on a total solids basis. In other embodiments, a sizing composition comprises at least one film former in an amount up to about 75 weight percent on a total solids basis. In some embodiments, a sizing composition comprises at least one film former in an amount up to about 60 weight percent on a total solids basis. In some embodiments, a sizing composition comprises at least one film former in an amount up to about 50 weight percent based on a total solids basis. In another embodiment, a sizing composition comprises at least one film former in an amount greater than about 5 weight percent on a total solids basis.

Some embodiments of sizing compositions of the present invention further comprise one or more non-aminofunctional coupling agents in addition to any aminofunctional coupling agents participating in the formation of the acid-amine component. Non-limiting examples of non-aminofunctional coupling agents comprise $\gamma$-isocyanatopropyltriethoxysilane, vinyl-trimethoxysilane, vinyl-triethoxysilane, allyltrimethoxysilane, mercaptopropyltrimethoxysilane, mercaptopropyltriethoxysilane, glycidoxypropyltriethoxysilane, glycidoxypropyltrimethoxysilane, 4,5-epoxycyclohexylethyltrimethoxysilane, chloropropyltriemethoxysilane, and chloropropyltriethoxysilane.

Non-limiting embodiments of sizing compositions of the present invention can also comprise a plurality of coupling agents, some of which may participate in the formation of an acid-amine component and others which do not participate in the formation of an acid-amine component. The use of multiple coupling agents can advantageously result in the sizing composition being compatible with a variety of resins, including thermosetting resins, thermoplastic resins, and other resins. The amount and type of each coupling agent used in a sizing composition of the present invention may be selected based on resin compatibility, effect on fiber glass strand properties (e.g., lower broken filaments, abrasion resistance, strand integrity, and strand friction), and compatibility with other components of the sizing composition.

In some embodiments, a sizing composition of the present invention comprises at least one coupling agent in an amount of up to about 40 weight percent based on a total solids basis. In another embodiment, a sizing composition comprises at least one coupling agent in an amount up to about 25 weight percent or up to about 15 weight percent based on a total solids basis. In some embodiments, a sizing composition comprises at least one coupling agent in an amount up to about 10 weight percent or up to about 5 weight percent on a total solids basis. In other embodiments, a sizing composition comprises at least one coupling agent in an amount up to about 3 weight percent or up to about 1 weight percent on a total solids basis. The foregoing amounts correspond to coupling agent in the sizing composition that does not participate in the formation of the acid-amine component.

In one embodiment, a sizing composition of the present invention does not comprise a coupling agent.

In some embodiments, a sizing composition of the present invention can further comprise at least one lubricant. Any lubricant known to one of skill in the art not inconsistent with the objectives of the present invention can be used. Lubricants can be used, for example, in sizing compositions of the present invention to assist with internal lubrication (e.g., fiber-to-fiber abrasion) and to assist with external lubrication (e.g., glass-to-contact point abrasion). In some embodiments, the at least one lubricant may comprise at least one cationic lubricant. In other embodiments, the at least one lubricant may comprise at least one non-ionic lubricant. In a further embodiment, the at least one lubricant may comprise at least one cationic lubricant and at least one nonionic lubricant.

Cationic lubricants may be used in embodiments of the present invention, for example, to assist with internal lubrication, such as by reducing filament-to-filament or glass-to-glass abrasion. In general, most cationic lubricants known to those of skill in the art can be used in embodiments of the present invention. Non-limiting examples of cationic

lubricants suitable for use in sizing compositions of the present invention include lubricants with amine groups, lubricants with ethoxylated amine oxides, and lubricants with ethoxylated fatty amides. A non-limiting example of a lubricant with an amine group is a modified polyethylenimine, e.g. EMERY 6717, which is a partially amidated polyethylenimine commercially available from Pulcra Chemicals of Charlotte, NC. Another example of a cationic lubricant useful in embodiments of the present invention is ALUBRASPIN 226, which is a partially amidated polyethylenimine commercially available from BASF Corp. of Parsippany, New Jersey.

In some embodiments, a lubricant comprises one or more partial esters of a branched carboxylic acid copolymer. The partial ester and derivatives thereof are polymers with pendant hydrocarbon and ethoxylated ester chains. A commercially available version of a suitable partial ester of a branched carboxylic acid copolymer is that from Akzo Chemie America of Chicago, Illinois under the trade designation Ketjenlube 522 partial ester. (formerly sold as DAPRAL® GE 202 partial ester.)

Non-ionic lubricants, in some embodiments, comprise at least one wax. Examples of waxes suitable for use in the present invention include polyethylene wax, paraffin wax, polypropylene wax, microcrystalline waxes, and oxidized derivatives of these waxes. One example of a polyethylene wax suitable for use in the present invention is Protolube HD-A, which is a high density polyethylene wax commercially available from Bayer Corporation of Pittsburgh, Pa. An example of a paraffin wax suitable in embodiments of the present invention is Elon PW, which is a paraffin wax emulsion commercially available from Elon Specialties of Concord, N.C.

As provided herein, in some embodiments, lubricants comprising one more amine functionalities can participate in the formation of an acid-amine component.

A sizing composition, in some embodiments, comprises at least one lubricant in an amount up to about 10 weight percent on a total solids basis. In another embodiment a sizing composition comprises at least one lubricant in an amount up to about 5 weight percent on a total solids basis. In a further embodiment, a sizing composition comprises at least one lubricant in an amount less than about 1 weight percent on a total solids basis. In some embodiments, a sizing composition comprises at least one lubricant in an amount of at least 1 weight percent on a total solids basis. The foregoing amounts correspond to lubricant in the sizing composition that does not participate in the formation of the acid-amine component.

In some embodiments, a sizing composition of the present invention can further comprise at least one biocide. A biocide can be added as a precautionary measure to preclude potential problems associated with yeast, mold, aerobic bacteria, and other biological products. Any biocides known to those skilled in the art to control organic growth in sizing compositions for glass fibers can generally be used in embodiments of sizing compositions of the present invention. Non-limiting examples of biocides that can be used in the present invention include organotin biocides, methylene thiocyanate biocides, nitro-biocides, and chlorinated and brominated compounds. A non-limiting example of a commercially available biocide for use in embodiments of sizing compositions of the present invention is Bioban BP-30 from Dow Chemical or Parmetol® DF35 of Schulke and Mayr.

In some embodiments, sizing compositions of the present invention have a pH ranging from about 5.0 to about 10.5. In other embodiments, sizing compositions of the present invention have a pH ranging from about 6.0 to about 8.0. In some embodiments, sizing compositions of the present invention can have a pH less than about 5.0 or greater than about 10.5. The pH of a sizing composition, in some embodiments, is adjusted to fall within any of the foregoing pH ranges.

Some embodiments of the present invention provide a fiber glass strand comprising at least one glass fiber at least partially coated with a sizing composition of the present invention. In some embodiments, a sizing composition of the present invention is a primary sizing composition.

In some embodiments, for example, a sizing composition of the present invention comprising at least one film former and at least one acid-amine component is applied to at least one glass fiber as a primary sizing composition. A sizing composition comprising an acid-amine component without a separate film former is subsequently applied to the at least one glass fiber as a secondary sizing composition. Alternatively, in other embodiments, for example, a sizing composition of the present invention comprising an acid-amine component without a separate film former is applied to at least one glass fiber as a primary sizing, and a sizing composition of the present invention comprising an acid-amine component and at least one film former is subsequently applied to the at least one glass fiber as a secondary sizing.

Fiber glass strands comprising at least one fiber at least partially coated with a sizing composition of the present invention, in some embodiments, can comprise chopped strands. Chopped fiber glass strands, in some embodiments, can have a length ranging from about 3 mm to about 25 mm. In other embodiments, chopped fiber glass strands can have length ranging from about 5 mm to about 25 mm. In another embodiment, chopped fiber glass strands have a length less than about 5 mm or greater than about 25 mm.

Some embodiments of fiber glass strands comprising at least one fiber at least partially coated with a sizing composition of the present invention can comprise continuous strands. Moreover, continuous fiber glass strands, according to some embodiments, can be wound into a single package such as a forming package or a direct draw package. In some embodiments, a plurality of fiber glass strands comprising at least one fiber at least partially coated with a sizing

composition of the present invention are assembled into rovings.

Persons of ordinary skill in the art will recognize that the present invention can be implemented in the production, assembly, and application of a number of glass fibers. Any glass fibers known to one of skill in the art not inconsistent with the objectives of the present invention can be used.

In general, glass fibers of any diameter can be used to form fiber glass stands of the present invention and/or to reinforce a composite. In some embodiments, relatively large diameter glass fibers can be used to form fiber glass strands and/or to reinforce a composite. Glass fibers, in some embodiments, can have a diameter of at least 21 microns. In some embodiments, the glass fibers can have a diameter of up to about 35 microns. Glass fibers for use in some embodiments can have a diameter of at least about 22 microns. In some embodiments, the glass fibers can have a nominal diameter of about 24 microns. In some embodiments, fiber glass stands comprising larger diameter fibers (e.g., greater than about 21 microns) can be used as reinforcement in a composite and can result in a composite advantageously having physical properties comparable to composites reinforced with smaller diameter fibers.

Sizing compositions of the present invention can be applied to glass fibers by suitable methods known to one of skill in the art such as, but not limited to, by contacting the glass fibers with a static or dynamic applicator, such as a roller or belt applicator, or by spraying, or by other means. The overall concentration of the non-volatile components in the sizing composition can be adjusted over a wide range according to the means of application to be used, the character of the glass fiber to be sized, and the weight of the dried size coating desired for intended use of the sized glass fibers. In some embodiment, the sizing composition can be applied to glass fibers in the forming operation of the fibers.

The amount of sizing composition on fiber glass may be measured as "loss on ignition" or "LOI". As used herein, the term "loss on ignition" or "LOI" means the weight percent of dried sizing composition present on the fiber glass as determined by Equation 1:

$$LOI = 100 X [(W_{dry} - W_{bare})/W_{dry}] \qquad \text{(Eq. 1)}$$

wherein $W_{dry}$ is the weight of the fiber glass plus the weight of the coating after drying in an oven at 220° F (about 104° C) for 60 minutes, and $W_{bare}$ is the weight of the bare fiber glass after heating the fiber glass in an oven at 1150° F (about 621° C) for 20 minutes and cooling to room temperature in a dessicator.

In some embodiments, a fiber glass strand of the present invention has a LOI ranging from about 0.05 and about 1.5. In another embodiment, a fiber glass strand of the present invention has a LOI ranging from about 0.1 to about 0.5. In a further embodiment, a fiber glass strand of the present invention has a LOI of about 0.4.

Some embodiments of the present invention relate to glass fiber reinforced thermoplastic or thermoset composites. In some embodiments, a glass fiber reinforced thermoplastic or thermoset composite comprises a thermoplastic or thermoset resin and at least one glass fiber at least partially coated with a sizing composition of the present invention. In some embodiments, thermoplastic resins reinforced with glass fibers of the present invention comprise polyolefins such as polyethylene and polypropylene, polyamides, polyphenylene oxide, polystyrenics, or polyesters such as polybutylene terephthalate (PBT) and polyethylene terephthalate (PET). In some embodiments, thermoset resins reinforced with glass fibers of the present invention comprise polyester resins, polyimide resins, phenolic resins, and epoxy resins.

The glass fibers can be used to reinforce polymeric matrices in any of the molding processes known to those skilled in the art utilizing either chopped strand, continuous strand or a mixture thereof. For example, chopped fiber strands can be mixed with a matrix polymer resin melt. The composite melt can be subsequently molded to produce a polymeric part or a shaped device. In some embodiments, glass fibers are mixed with matrix polymer resin in a dry powder mixture.

Glass fibers at least partially coated with a sizing composition of the present invention can have any desired length. In some embodiments, glass fibers at least partially coated with a sizing composition of the present invention have dimensions suitable for use in long fiber reinforcement applications including G-LFT (Granular-Long Fiber Thermoplastic) and D-LFT (Direct-Long Fiber Thermoplastic). In some embodiments of fiber reinforced thermoplastic composites, glass fibers have an aspect ratio ranging from about 5 to 50. As used herein, "aspect ratio" refers to a glass fiber's length divided by the glass fibers diameter. In some embodiments, a glass fiber at least partially coated with a sizing composition of the present invention has an aspect ratio of at least 100 or at least 200.

In some embodiments, a fiber reinforced thermoplastic or thermoset composite comprises any desired amount of glass fibers at least partially coated with a sizing composition of the present invention. In one embodiment, a plurality glass fibers can be present in an amount up to about 90 weight percent of the composite. In another embodiment, the plurality of glass fibers are present in an amount up to about 80 weight percent of the composite. In some embodiments, the plurality of glass fibers are present in an amount up to about 65 weight percent of the composite. In some embodiments, the plurality of glass fibers are present in an amount greater than about 10 weight percent of the composite. In some embodiments, the plurality of glass fibers are present in an amount greater than about 20 weight percent of the composite.

In another embodiment, the plurality of glass fibers are present in an amount greater than about 30 weight percent of the composite.

In some embodiments, composites of the present invention can be reinforced with glass fibers at least partially coated with sizing compositions described herein and that have relatively large diameters. For example, some embodiments of composites can be reinforced with glass fibers having a diameter of at least 21 microns, having a diameter of at least 22 microns, or having a nominal diameter of about 24 microns.

In some embodiments, composites reinforced with relatively large diameter glass fibers can result in a composite advantageously having mechanical properties comparable to composites reinforced with smaller diameter fibers. Polypropylene is one example of a thermoplastic resin that, when reinforced with relatively large diameter glass fibers, can have mechanical properties comparable to its reinforcement with smaller diameter fibers. Non-limiting examples of such properties include tensile strength, tensile modulus, flexural strength, and flexural modulus.

Embodiments of the present invention also provide methods of making a glass fiber reinforced thermoplastic or themoset composite. In one embodiment, a method of making a glass fiber reinforced thermoplastic or thermoset composite comprises providing a plurality of glass fibers, at least partially coating the plurality of glass fibers with a sizing composition of the present invention, and disposing the plurality of coated glass fibers in a thermoplastic or thermoset resin. As provided herein, glass fibers can be assembled into continuous fiber glass strands. The fiber glass strands can be chopped, remain continuous, or be assembled into rovings for thermoplastic or thermoset reinforcement applications.

Some exemplary embodiments of the present invention will now be illustrated in the following specific, non-limiting examples.

EXAMPLE 1

A non-limiting embodiment of a sizing composition of the present invention was prepared in accordance with the following formulation:

| Sizing Formulation (20 Liters) | | |
|---|---|---|
| Component | Amount (g) | % of Solids |
| Demineralized water | 7000 | 0 |
| Acetic Acid (80%) | 87.2 | 0 |
| Silane[1] | 523.3 | 36.13 |
| Hypophosphorus acid (50%) | 156.0 | 8.67 |
| Film Former[2] | 1367.5 | 53.20 |
| Lubricant[3] | 18.0 | 2.00 |
| Biocide[4] | 0.018 | 0.0007 |
| Demineralized water to fill | 10847.9 | 0 |

[1]DYNASYLAN AMEO 3-aminopropyltriethoxysilane from Degussa AG of Dusseldorf, Germany
[2]Neoxil 604 from DSM, B.V. of the Netherlands
[3]DAPRAL GE 202 from Akzo Chemie of Chicago, Illinois
[4]PARMETOL DF35 from Schulke and Mayr

The sizing composition of Example 1 was prepared by providing about 7 liters of demineralized water to a main mixing tank with an agitator. The specified amount of acetic acid was added to the main mixing tank, and the resulting solution was agitated for five minutes. After agitation, the specified amount of aminosilane was added to the main mixing tank, and the resulting solution was agitated for 10 minutes. The specified amount of hypophosphorus acid was subsequently added to the main mixing tank, and the resulting solution was agitated for 10 minutes. The addition of the hypophosphorus acid to the main mixing tank induced the formation of the acid-amine component comprising the aminosilane and the hypophosphorus acid.

The specified amount of film former was subsequently added to the mix tank with agitation. Hot water was added to a premix tank, and the specified amount lubricant was added to the premix tank. The resulting mixture was subsequently agitated for 10 minutes to disperse the lubricant. The lubricant dispersion was then added to the main mix tank. The specified amount of biocide was added to the main mix tank, and demineralized water was added to balance

the formulation to 20 liters. The prepared sizing composition had a pH of about 7.5.

EXAMPLE 2

A non-limiting embodiment of a sizing composition of the present invention was prepared in accordance with the following formulation:

| Sizing Formulation (20 Liters) | | |
|---|---|---|
| Component | Amount (g) | % of Solids |
| Demineralized water | 7000 | 0 |
| Acetic Acid (80%) | 87.2 | 0 |
| Silane[1] | 523.3 | 24.07 |
| Hypophosphorus acid (50%) | 156.0 | 5.78 |
| Film Former[2] | 2655.0 | 68.82 |
| Lubricant[3] | 18.0 | 1.33 |
| Biocide[4] | 0.018 | 0.0005 |
| Demineralized water to fill | 9560.4 | 0 |
| [1]DYNASYLAN AMEO 3-aminopropyltriethoxysilane from Degussa AG of Dusseldorf, Germany<br>[2]Neoxil 604 from DSM, B.V. of the Netherlands<br>[3]DAPRAL GE 202 from Akzo Chemie of Chicago, Illinois<br>[4]PARMETOL DF35 from Sculke and Mayr | | |

The sizing composition of Example 2 was prepared by providing about 7 liters of demineralized water to a main mixing tank with an agitator. The specified amount of acetic acid was added to the main mixing tank, and the resulting solution was agitated for five minutes. After agitation, the specified amount of aminosilane was added to the main mixing tank, and the resulting solution was agitated for 10 minutes. The specified amount of hypophosphorus acid was subsequently added to the main mixing tank, and the resulting solution was agitated for 10 minutes. The addition of the hypophosphorus acid to the main mixing tank induced the formation of the acid-amine component comprising the aminosilane and the hypophosphorus acid, as provided herein.

The specified amount of film former was subsequently added to the mix tank with agitation.

Hot water was added to a premix tank and the specified amount of lubricant was added to the premix tank. The resulting mixture was subsequently agitated for 10 minutes to disperse the lubricant. The lubricant dispersion was then added to the main mix tank. The specified amount of biocide was added to the main mix tank, and demineralized water was added to balance the formulation to 20 liters. The prepared sizing composition had a pH of about 7.5.

EXAMPLE 3

A non-limiting embodiment of a sizing composition of the present invention was prepared in accordance with the following formulation:

| Sizing Formulation (20 Liters) | | |
|---|---|---|
| Component | Amount (g) | % of Solids |
| Demineralized water | 7000 | 0 |
| Acetic Acid (80%) | 139.6 | 0 |
| Silane[1] | 837.4 | 38.25 |
| Hypophosphorus acid (50%) | 156.0 | 5.74 |
| Film Former[2] | 2124.6 | 54.69 |
| Lubricant[3] | 18.0 | 1.32 |

(continued)

| Sizing Formulation (20 Liters) | | |
|---|---|---|
| Component | Amount (g) | % of Solids |
| Biocide[4] | 0.018 | 0.0005 |
| Demineralized water to fill | 9724.5 | 0 |
| [1]DYNASYLAN AMEO 3-aminopropyltriethoxysilane from Degussa AG of Dusseldorf, Germany<br>[2]Neoxil 604 from DSM, B.V. of the Netherlands<br>[3]DAPRAL GE 202 from Akzo Chemie of Chicago, Illinois<br>[4]PARMETOL DF35 from Sculke and Mayr | | |

The sizing composition of Example 2 was prepared by providing about 7 liters of demineralized water to a main mixing tank with an agitator. The specified amount of acetic acid was added to the main mixing tank, and the resulting solution was agitated for five minutes. After agitation, the specified amount of aminosilane was added to the main mixing tank, and the resulting solution was agitated for 10 minutes. The specified amount of hypophosphorus acid was subsequently added to the main mixing tank, and the resulting solution was agitated for 10 minutes. The addition of the hypophosphorus acid to the main mixing tank induced the formation of the acid-amine component comprising the aminosilane and the hypophosphorus acid as provided herein.

The specified amount of film former was subsequently added to the mix tank with agitation.

Hot water was added to a premix tank and the specified amount of lubricant was added to the premix tank. The resulting mixture was subsequently agitated for 10 minutes to disperse the lubricant. The lubricant dispersion was then added to the main mix tank. The specified amount of biocide was added to the main mix tank, and demineralized water was added to balance the formulation to 20 liters. The prepared sizing composition had a pH of about 7.5.

EXAMPLE 4

Non-limiting embodiments of sizing compositions of the present invention having the formulations A and B were prepared in accordance with the protocol of Example 1. Each of sizing compositions A and B included a phosphorus-containing acid comprising hypohosphorus acid resulting in the formation of an acid-amine component comprising the aminosilane and the hypophosphorus acid.

| Sizing Formulation (20 Liters) | | | | | | | |
|---|---|---|---|---|---|---|---|
| Sizing Composition | Acetic Acid (HAc 80%) (g) | Silage[1] (g) | Hypophosphorus Acid (HHP) (g)[2] | Film Former[3] (g) | Lubricant[4] (g) | pH | mol ratio of HHP to Silane |
| A | 133.2 | 523.3 | 78.3 | 2600 | 26 | 7.4 | 0.25 |
| B | 88.8 | 523.3 | 156.6 | 2488 | 26 | 7.3 | 0.5 |
| [1] [1]DYNASYLAN AMEO 3-aminopropyltriethoxysilane from Degussa AG of Dusseldorf, Germany (36% solids)<br>[2] 50% Solution<br>[3] Neoxil 605 from DSM, B.V. of the Netherlands (53.2% solids)<br>[4] DAPRAL GE 202 from Akzo Chemie of Chicago, Illinois (2% solids) | | | | | | | |

Comparative sizing compositions having the formulations C, D and E were prepared in accordance with the protocol of Example 1. The comparative sizing compositions did not include a phosphorus-containing acid or sulfur-containing acid for formation of an acid-amine component. In sizing compositions D and E, the hypophosphorus acid component was replaced by the acid salt, sodium hypophosphite obtained from Transmare, B.V. of the Netherlands. Sizing composition C did not have an acid content other than the acetic acid.

| Sizing Formulation (20 Liters) | | | | | | | |
|---|---|---|---|---|---|---|---|
| Sizing Composition | Acetic Acid (HAc 80%) (g) | Silane[5] (g) | Sodium Hypophosphite (SHP) (g) | Film Former[6] (g) | Lubricant[7] (g) | pH | mol ratio of SHP to Silane |
| C | 177.6 | 523.3 | 0.0 | 2711 | 26 | 7.0 | 0.0 |
| D | 177.6 | 523.3 | 62.9 | 2562 | 26 | 7.3 | 0.25 |
| E | 177.6 | 523.3 | 125.8 | 2413 | 26 | 7.7 | 0.5 |
| [5] [1]DYNASYLAN AMEO 3-aminopropyltriethoxysilane from Degussa AG of Dusseldorf, Germany (36% solids)<br>[6] Neoxil 605 from DSM, B.V. of the Netherlands (53.2% solids)<br>[7] DAPRAL GE 202 from Akzo Chemie of Chicago, Illinois (2% solids) | | | | | | | |

Sizing composition A was at least partially applied to continuous fiber glass filaments using a sizing applicator. The fiber glass filaments were gathered into strands and the strands assembled into a continuous roving. The roving was subsequently wound into a forming package on a winder and dried using conventional techniques. The foregoing application, assembly, winding and drying processes were independently repeated for each of sizing compositions B-E to produce independent forming packages of rovings for each sizing composition.

A continuous roving comprising glass fiber filaments at least partially coated with sizing composition A was tested for resistance to broken filaments (fly) according to the following method. The continuous roving was attached to a winding drum and drawn across five tension bars in a fly box for a time period sufficient to draw about 0.5 kg to about 1 kg of continuous roving across the bars. Any broken filaments resulting from drawing of the roving across the tension bars were captured by the fly box. At the completion of the drawing, the broken filaments collected in the fly box were weighed. Moreover, the length of continuous roving drawn over the five tension bars was also weighed. The fly value was subsequently determined according to Formula (V):

$$[(\text{weight of broken filaments})/(\text{weight of roving drawn})] \times 1000 \text{ mg/kg} \qquad (V)$$

The foregoing fly test method was independently repeated for continuous rovings for each forming package corresponding to sizing compositions B-E. The results of the fly testing are provided in Table I.

Table I - Fly Testing Results

| Sizing Composition | Mean Fly (mg/kg) |
|---|---|
| A | 5 |
| B | 7 |
| C | 21 |
| D | 19 |
| E | 26 |

As provided in Table I, continuous rovings comprising glass fibers at least partially coated with sizing compositions A or B comprising an acid-amine component demonstrated an order of magnitude less broken filaments in the fly testing in comparison with continuous rovings of sizing compositions C-E. The reduction in the number of broken filaments for sizing compositions A and B provides an indication that the sizing compositions were sufficiently spread over surfaces of the fibers to impart protection of the fibers during the testing process. The desirable spreading properties of sizing compositions A and B comprising an acid-amine component can be attributed to the film forming properties of the acid-amine component. Continuous rovings comprising glass fibers at least partially coated with sizing compositions D or E demonstrated significantly higher numbers of broken filaments. The sizing compositions D and E did not contain an acid-amine component as the salt of a phosphorus-containing acid was used to prepare these sizing compositions.

EXAMPLE 5

Non-limiting embodiments of sizing compositions of the present invention having the formulations F-K were prepared in accordance with the protocol of Example 1. Each of sizing compositions F-K included a phosphorus-containing acid comprising hypohosphorus acid resulting in the formation of an acid-amine component comprising the aminosilane and the hypophosphorus acid.

| Sizing Formulation (20 Liters) | | | | | | | |
|---|---|---|---|---|---|---|---|
| Sizing Composition | Acetic Acid (HAc 80%) (g) | Silane[8] (g) | Hypophosphorus Acid (g)[9] | Film Forrner[10] (g) | Lubricant [11] (g) | pH | mol ratio of HHP to Silane |
| F | 130.8 | 523.3 | 78.0 | 2600 | 26 | 7.3 | 0.25 |
| G | 87.2 | 523.3 | 156.0 | 2489 | 26 | 7.4 | 0.50 |
| H | 43.6 | 523.3 | 234.0 | 2377 | 26 | 6.9 | 0.75 |
| I | 209.3 | 837.4 | 78.0 | 2043 | 26 | 8.4 | 0.16 |
| J | 139.6 | 837.4 | 156.0 | 1931 | 26 | 8.9 | 0.31 |
| K | 69.8 | 837.4 | 234.0 | 1820 | 26 | 9.0 | 0.47 |

[8] [1]DYNASYLAN AMEO 3-aminopropyltriethoxysilane from Degussa AG of Dusseldorf, Germany (36% solids)
[9] 50% Solution
[10] Neoxil 605 from DSM, B.V. of the Netherlands (53.2% solids)
[11] DAPRAL GE 202 from Akzo Chemie of Chicago, Illinois (2% solids)

Comparative sizing compositions having the formulations L-Q were prepared in accordance with the protocols of Example 1. The comparative sizing compositions did not include a phosphorus-containing acid or sulfur-containing acid for formation of an acid-amine component. In sizing compositions L-Q, the hypophosphorus acid component was replaced by the acid salt, sodium hypophosphite obtained from Transmare, B.V. of the Netherlands.

| Sizing Formulation (20 Liters) | | | | | | | |
|---|---|---|---|---|---|---|---|
| Sizing Composition | Acetic Acid (HAc 80%) (g) | Silane[12] (g) | Sodium Hypophosphite (SHP) (g) | Film Fonner[13] (g) | Lubricant[14] (g) | pH | mol ratio of SHP to Silane |
| L | 174.4 | 523.3 | 104.1 | 2463 | 26 | 7.7 | 0.41 |
| M | 174.4 | 523.3 | 208.3 | 2217 | 26 | 8.0 | 0.83 |
| N | 174.4 | 523.3 | 312.4 | 1969 | 26 | 8.2 | 1.24 |
| O | 279.1 | 837.4 | 104.1 | 1905 | 26 | 7.9 | 0.26 |
| P | 279.1 | 837.4 | 208.3 | 1660 | 26 | 7.8 | 0.52 |
| Q | 279.1 | 837.4 | 312.4 | 1411 | 26 | 7.7 | 0.78 |

[12] [1]DYNASYLAN AMEO 3-aminopropyltriethoxysilane from Degussa AG of Dusseldorf, Germany (36% solids)
[13] Neoxil 605 from DSM, B.V. of the Netherlands (53.2% solids)
[14] DAPRAL GE 202 from Akzo Chemie of Chicago, Illinois (2% solids)

Sizing composition F was applied to continuous fiber glass filaments using a sizing applicator, and the continuous fiber glass filaments were gathered into strands. The continuous fiber glass strands were subsequently chopped into 4.5 mm fiber glass strands and dried according to standard techniques. The foregoing application, gathering, chopping and drying processes were repeated for each of sizing compositions G-Q to produce chopped fiber glass strands corresponding to each sizing composition G-Q.

The chopped fiber glass strands of each sizing composition F-Q were subsequently tested for resistance to the formation of fuzz according to the following procedure. 120 g of chopped strands were weighed into a first steel cup having an anti-static cloth placed therein. 120 g of chopped strands were weighed into a second steel cup having a

second anti-static cloth placed therein. Both steel cups containing the chopped fiber glass strands were secured into a shaker manufactured by Red Devil Equipment Company of Plymouth, Minnesota and subjected to 6 minutes of shaking. Subsequent to shaking, the chopped fiber glass strands of the first steel cup were sieved to separate any fuzz resulting from the shaking treatment. Any fuzz was weighed. The chopped fiber glass strands of the second steel cup were additionally sieved and any resulting fuzz weighed. The % fuzz for chopped fibers glass strands of each steel cup was calculated by dividing the weight of fuzz by 120 g and multiplying the resulting value by 100. The % fuzz for the chopped fiber glass strands of the first and second steel cups was then averaged to produce the final % fuzz value.

The fuzz testing was completed for chopped fiber glass strands of each sizing composition F-Q. The results of the fuzz testing are provided in Table II.

Table II - Fuzz Testing Results

| Sizing Composition | % Fuzz |
|---|---|
| F | 0.3 |
| G | 0.5 |
| H | 0.8 |
| I | 1.1 |
| J | 0.8 |
| K | 0.9 |
| L | 3.5 |
| M | 8.3 |
| N | 19.3 |
| O | 10.1 |
| P | 14.9 |
| Q | 16.6 |

As demonstrated in Table II, chopped fiber glass strands comprising glass fibers at least partially coated with sizing compositions of the present invention comprising an acid-amine component (F-K) displayed a % fuzz an order of magnitude and, in some cases, two orders or magnitude less than sizing compositions not containing an acid-amine component.

The reduction in the % fuzz for sizing compositions F-K provides an indication that the sizing compositions were sufficiently spread over surfaces of the fibers to improve the integrity of the chopped fiber glass strands. The desirable spreading properties of sizing compositions F-K comprising an acid-amine component can be attributed to the film forming properties of the acid-amine component. Chopped fiber glass strands comprising glass fibers at least partially coated with one of the sizing compositions L-Q demonstrated a significantly higher % fuzz. The sizing compositions L-Q did not contain an acid-amine component as the salt of a phosphorus-containing acid was used to prepare these sizing compositions.

EXAMPLE 6

A non-limiting embodiment of a sizing composition of the present invention was prepared in accordance with the following formulation:

| Sizing Formulation (1000 kg) | | |
|---|---|---|
| Component | Amount (kg) | % of Solids |
| Demineralized water | 370.00 | |
| Acetic Acid (glacial) | 9.12 | |
| Silane[15] | 67.90 | 24.09 |
| Hypophosphorus acid (50%) | 20.18 | 5.76 |
| Film Former[16] | 342.50 | 68.48 |
| Lubricant[17] | 2.34 | 1.34 |
| Hot demineralized water for Lubricant | 10.00 | |

(continued)

| Sizing Formulation (1000 kg) | | |
|---|---|---|
| Component | Amount (kg) | % of Solids |
| Anti-foaming Agent[18] | 0.10 | 0.00 |
| Biocide[19] | 1.63 | 0.33 |
| Cold demineralized water for Biocide | 10.00 | |
| Acetic Acid (glacial) | 0.36 | |
| Demineralized water to fill | 165.87 | 0 |

[15] DYNASYLAN AMEO-P 3-aminopropyltriethoxysilane from Degussa AG of Dusseldorf, Germany
[16] Neoxil 605 from DSM, B.V. of the Netherlands
[17] DAPRAL GE 202 from Akzo Chemie of Chicago, Illinois
[18] Drewplus L-140 from Ashland Inc. of Covington, KY
[19] Kathon LX 1.5% from Rohm and Haas Company of Coventry UK

The above sizing composition was prepared by providing about 370 kg of demineralized water to a main mixing tank with an agitator. The specified amount of acetic acid was added to the main mixing tank, and the resulting solution was agitated for five minutes. After agitation, the specified amount of aminosilane was added to the main mixing tank, and the resulting solution was agitated for 10 minutes. The specified amount of hypophosphorus acid was subsequently added to the main mixing tank, and the resulting solution was agitated for 10 minutes. The addition of the hypophosphorus acid to the main mixing tank induced the formation of the acid-amine component comprising the aminosilane and the hypophosphorus acid, as provided herein. The pH was checked and adjusted to 6.3 with acetic acid.

The specified amount of film former was subsequently added to the mix tank with agitation.

Hot water was added to a premix tank and the specified amount of lubricant was added to the premix tank. The resulting mixture was subsequently agitated for 10 minutes to disperse the lubricant. The lubricant dispersion was then added to the main mix tank. The anti-foaming agent was then added to the main mix tank. Cold water was added to a premix tank and the specified amount of biocide was added to the premix tank. The resulting mixture was subsequently agitated for 10 minutes. The biocide mixture was then added to the main mix tank. Demineralized water was added to balance the formulation to 1000 kg. Finally, additional acetic acid was added to the main mix tank to bring the final pH to about 7.0. The prepared sizing composition had a pH of about 7.0 and a total solids content of 17.5 weight percent.

EXAMPLE 7

Properties of composites reinforced with glass fibers at least partially coated with sizing compositions of the present invention were also evaluated. In this Example, three different fiber glass products were compounded as G-LFT (Granular-Long Fiber Thermoplastic) and tested in reinforcing polypropylene composites.

Table III below describes the three composites that were tested and provides information about certain tests that were conducted and the results. Composite A was made using PPG's commercial TUFROV® 4588 product which is compatible with polypropylene and includes glass fibers having a nominal diameter of 17 microns. Composites B and C were each made from glass fibers coated with the sizing composition described in Example 6 above. The glass fibers used in Composite B had a nominal diameter of 17 microns, and the glass fibers used in Composite C had a nominal diameter of 24 microns.

Fiber glass strands comprising glass fibers at least partially coated with the sizing compositions were then used to make composites. Composites A-C were each made using the same equipment and procedures. In making each composite, fiber glass rovings (comprising the specified glass fibers) were processed through a cross-head pultrusion G-LFT line resulting in pellets having a nominal length of ~12 mm (~0.5 inches). The polymeric resin used to form the pellets was 3860X homopolymer polypropylene commercially available from Total Petrochemicals. Other ingredients used to form the pellets were: (a) BONDYRAM® 1001 from Polyram, which is a maleic anhydride modified polypropylene homopolymer with maleic anhydride present in an amount of about 1 weight percent; (b) a conventional heat stabilizer package; and (c) carbon black. The maleic anhydride modified polypropylene homopolymer acts as a coupling agent and was used in an amount of about two weight percent (based on the total weight of the mixture including the glass fibers). The glass content of the pellets was controlled to produce a target weight of ~50% glass in the composite. As noted above, the pellets were cut to a nominal length of 12 mm. The pellets were then dried at 120 °C for four hours and the moisture was measured for each sample prior to molding. The maximum allowed moisture content prior to

molding was 0.6% based on total weight.

A Van Dorn 55 injection molding machine was used to mold the test specimens. A free flow check valve was installed on the screw tip prior to the initiation of this work. The mold used was a standard ISO tensile test specimen mold with large diameter sprues and runners and large radius curves. The gate was a fan gate to the tensile specimens. The mold was a balanced design producing two tensile specimens per shot. Impact and flex specimens were cut from the tensile bars by removing the tab section of the specimen. All test specimens conformed to ISO requirements.

A number of tests were conducted on the composites and the results are provided in Table III.

Table III - G-LFT Composites

| | | | **Composite A** | **Composite B** | **Composite C** |
|---|---|---|---|---|---|
| | | | TUFROV® 4588 | Sizing Composition from Example 6 | Sizing Composition from Example 6 |
| | | | 17 micron nominal fiber diameter | 17 micron nominal fiber diameter | 24 micron nominal fiber diameter |
| **Property** | **Units (ISO)** | **ISO Method** | | | |
| % Glass Content (Avg) | % | ISO 1172 | 51.96 | 43.53 | 47.53 |
| Flexural Strength (Avg) | MPa | ISO 14125 | 188.28 | 211.27 | 209.48 |
| Flexural Modulus (Avg) | MPa | ISO 14125 | 13538 | 10613 | 13755 |
| Tensile Strength, Dry (Avg) | MPa | ISO 527-2 | 106.1 | 123 | 114.8 |
| Tensile Modulus, Dry (Avg) | MPa | ISO 527-2 | 13440 | 10670 | 13780 |
| Tensile Elongation at Break, Dry (Avg) | % | ISO 527-2 | 0.846 | 1.68 | 1.08 |
| Charpy Unnotched Impact (Avg) | $kJ/m^2$ | ISO 179-1 | 53.1 | 64.1 | 57.3 |
| Charpy Notched Impact (Avg) | $kJ/m^2$ | ISO 179-1 | 30 | 25.3 | 31.3 |

The data show that Composite B, made with glass fibers at least partially coated with one embodiment of a sizing composition of the present invention, generally provide better physical properties than Composite A, made with glass fibers at least partially coated with a commercial sizing composition that is compatible with polypropylene resins. Moreover, Composite C, made with glass fibers having a nominal diameter of 24 microns and at least partially coated with one embodiment of a sizing composition of the present invention, also exhibited physical properties that were generally better than Composite A. For example, even with a glass content that was 4% lower than Composite A, Composite C exhibited a somewhat higher modulus, tensile strength, flexural strength, and unnotched Charpy impact strength.

EXAMPLE 8

In this Example, three different fiber glass products were compounded in a D-LFT (Direct-Long Fiber Thermoplastic) process to produce a glass fiber reinforced polypropylene composites.

Table IV below describes the three composites that were tested and provides information about certain tests that were conducted and the results. Composite D was made using a commercially available fiber glass roving that is compatible with polypropylene and includes glass fibers having a nominal diameter of 17 microns. Composites E and F were each made from glass fibers coated with the sizing composition described in Example 6 above. The glass fibers used in Composites E and F each had a nominal diameter of 24 microns.

Fiber glass strands comprising glass fibers at least partially coated with the sizing compositions were then used

to make D-LFT composites. Composites D-F were each made using the same equipment and procedures. The composites were made using a 40 mm twin screw extruder with 8 zones, commercially available from Coperion GmbH. The extruder was set up to feed fiber glass rovings directly into the extruder at zone 4. The Coperion extruder was modified with a set of screws specifically designed for D-LFT manufacturing. A resin and conventional additives were fed into the extruder at zone 1. The resin used to form each of these composites was 120 MFI polypropylene homopolymer commercially available from Phillips Sumika Polypropylene Company as MARLEX® HGZ-1200. Other additives that were fed into the extruder at zone 1 with the resin were: (a) BONDYRAM® 1001 chemical coupling agent from Polyram, which is a maleic anhydride modified polypropylene homopolymer with maleic anhydride present in an amount of about 1 weight percent; and (b) a conventional heat stabilizer Masterbatch that includes carbon black. Individual batches of resin were mixed with the ration of 4.2 kg (9.3 pounds) of the polypropylene homopolymer, 91g (0.2 pounds) of the chemical coupling agent, 227g (0.5 pounds) of the heat stabilizer Masterbatch. This mixture was fed into the extruder in zone 1. The mixture was mixed, melted and transported down the extruder through subsequent zones.

The fiber glass rovings were introduced in zone 4 of the extruder, which is a low shear zone, and then cut to length by a set of elements in the extruder screws. The length of the fiber glass and the amount of glass in the composite are controlled by adjusting the feed rate of the polymer, by the number of rovings fed into the extruder, and by controlling the number of screw revolutions per minute (RPM) of the extruder using techniques known to those of skill in the art. For Composites D-F, four to six rovings were fed into the extruder to produce polypropylene D-LFT billets with a nominal amount of glass of 30 weight percent. These hot billets were then transferred to a mold in a compression press and molded into flat plaques. Subsequently these plaques were cut to size for mechanical testing. For Composite D (glass fibers with a nominal diameter of 17 microns), a larger number of rovings were fed into the extruder to obtain the correct glass content. Composites E and F required fewer glass fibers to achieve the desired glass levels due to the larger nominal fiber diameter. Additional details regarding extrusion of the composites are provided in Table IV below.

All test specimens conformed to ISO requirements. A number of tests were conducted on the composites and the results are provided in Table IV.

Table IV - D-LFT Composites

| | | | **Composite D** | **Composite E** | **Composite F** |
|---|---|---|---|---|---|
| | | | Commercial Product Compatible with Polypropylene | Sizing Composition from Example 6 | Sizing Composition from Example 6 |
| | | | 17 micron nominal fiber diameter | 24 micron nominal fiber diameter | 24 micron nominal fiber diameter |
| **Extruder Conditions** | | **Units** | | | |
| Feed Rate of Resin Mixture | | kg/h (1bs/hour) | 20.9 (46) | 20.9 (46) | 20.9 (46) |
| # of Strands of Fiber Glass Roving | | | 8 | 4 | 4 |
| Screw Speed | | rpm | 90 | 90 | 90 |
| Zone 1-2 Temp. | | °C | 165 | 165 | 165 |
| Zone 3-4 Temp. | | °C | 190 | 190 | 190 |
| Zone 5-6 Temp. | | °C | 210 | 210 | 210 |
| Zone 7-8 Temp. | | °C | 250 | 250 | 250 |
| Die Temp. | | °C | 300 | 300 | 300 |
| **Property** | **Units (ISO)** | **ISO Method** | | | |
| % Glass Content - Flow Direction (Avg) | % | ISO 1172 | 28.63 | 30.47 | 25.02 |
| % Glass Content - Cross Direction (Avg) | % | ISO 1172 | 28.42 | 29.72 | 23.76 |

(continued)

| Property | Units (ISO) | ISO Method | | | |
|---|---|---|---|---|---|
| Tensile Strength - Flow Direction, Dry (Avg) | MPa | ISO 527-2 | 53.15 | 70.35 | 65.63 |
| Tensile Strength - Cross Direction, Dry (Avg) | MPa | ISO 527-2 | 29.18 | 46.64 | 48.68 |
| Tensile Modulus - Flow Direction, Dry (Avg) | MPa | ISO 527-2 | 4438 | 4871 | 4394 |
| Tensile Modulus - Cross Direction, Dry (Avg) | MPa | ISO 527-2 | 2458 | 3578 | 3332 |
| Dynatup - Energy to Max Load (Avg) | Joules | ISO 6603-2 | 3.84 | 4.179 | 3.81 |

In D-LFT injection molding processes, glass fibers tend to orient in the direction of flow during mold filling. The glass fibers generally maintain that orientation in the cured composite. Composites formed in this manner are often tested in both the flow direction (the direction of flow during mold filling) and the cross flow direction (perpendicular or transverse to the flow direction). Composite properties, such as tensile strength, are expected to be higher in the flow direction due to the orientation of the glass fibers. Typically, composite manufacturers or customers of composite manufacturers will specify minimum physical properties of the composite for the cross flow direction because the flow direction normally has better physical properties.

The results in Table IV show that Composites E and F, representing some embodiments of the present invention, have significantly higher tensile strengths in the flow direction than comparative Composite D. Notably, the tensile strengths of Composites E and F in the cross flow direction are approaching the tensile strength of comparative Composite D in the flow direction. The production of a composite reinforced with fibers having diameters of 24 microns with such high tensile strength properties in the flow and cross flow directions, especially when compared with composites reinforced fibers having diameters of 17 microns, was unexpected since physical properties of composites tend to deteriorate as glass fiber diameter increases. These data suggest improved dispersion of the glass fibers in the composite and improved fiber retention. The other properties in Table IV demonstrate comparable or improved properties associated with Composites E and F relative to Composite D.

EXAMPLE 9

In this Example, five different fiber glass products were compounded in a D-LFT (Direct-Long Fiber Thermoplastic) process to produce a glass fiber reinforced polypropylene composites.

Table V and VI below describe eight composites that were tested and provide information about certain tests that were conducted and the results. In Table V, the composites had a nominal glass content of 30% and in Table VI, the same glass fibers were evaluated in composites at a nominal glass content of 40%. Composites G and K were made using PPG's commercial TUFROV® 4588 product which is compatible with polypropylene and includes glass fibers having a nominal diameter of 17 microns. Composites H and L were made using PPG's commercial TUFROV® 4599 product which is compatible with polypropylene and includes glass fibers having a nominal diameter of 17 microns. Composites I and M were made from glass fibers having a nominal diameter of 17 microns and coated with the sizing composition described in Example 6 above. Composites J and N were made from glass fibers having a nominal diameter of 24 microns and coated with the sizing composition described in Example 6 above.

Fiber glass strands comprising these glass fibers at least partially coated with the sizing compositions were then used to make D-LFT composites. Fiber glass strands comprising glass fibers at least partially coated with the sizing compositions were then used to make D-LFT composites. Composites D-F were each made using the same equipment and procedures. The composites were made using a 40 mm twin screw extruder with 8 zones, commercially available from Coperion GmbH. The extruder was set up to feed fiber glass rovings directly into the extruder at zone 4. The Coperion extruder was modified with a set of screws specifically designed for D-LFT manufacturing. A resin and conventional additives were fed into the extruder at zone 1. The resin used to form each of these composites was 120 MFI polypropylene homopolymer commercially available from Phillips Sumika Polypropylene Company as MARLEX® HGZ-1200. Other additives that were fed into the extruder at zone 1 with the resin were: (a) BONDYRAM® 1001 chemical coupling agent from Polyram, which is a maleic anhydride modified polypropylene homopolymer with maleic anhydride present in an amount of about 1 weight percent; and (b) a conventional heat stabilizer Masterbatch that includes carbon black. Individual batches of resin were mixed with the ration of 4.2 kg (9.3 pounds) of the polypropylene homopolymer, 91g (0.2 pounds) of the chemical coupling agent, and 227g (0.5 pounds) of the heat stabilizer Masterbatch. This mixture was fed into the extruder in zone 1. The mixture was mixed, melted and transported down the extruder through subsequent zones.

The fiber glass rovings were introduced in zone 4 of the extruder, which is a low shear zone, and then cut to length by a set of elements in the extruder screws. The length of the fiber glass and the amount of glass in the composite are controlled by adjusting the feed rate of the polymer, by the number of rovings fed into the extruder, and by controlling the number of screw revolutions per minute (RPM) of the extruder using techniques known to those of skill in the art. For Composites G-J, four to six rovings were fed into the extruder to produce polypropylene D-LFT billets with a nominal amount of glass of 30 weight percent. For Composites K-N, eight rovings were fed into the extruder to produce polypropylene D-LFT billets with a nominal amount of glass of 40 weight percent. These hot billets were then transferred to a mold in a compression press and molded into flat plaques. Subsequently these plaques were cut to size for mechanical testing. For Composites G-I and K-M (glass fibers with a nominal diameter of 17 microns), a larger number of rovings were fed into the extruder to obtain the correct glass content. Composites J and N required fewer glass fibers to achieve the desired glass levels due to the larger nominal fiber diameter. All test specimens conformed to ISO requirements.

A number of tests were conducted on the composites and the results are provided in Tables V (composites with nominal glass content of 30%) and VI (composites with nominal glass content of 40%).

Table V - D-LFT Composites (nominal 30% glass content)

| | | | **Comp. G** | **Comp. H** | **Comp. I** | **Comp. J** |
|---|---|---|---|---|---|---|
| | | | TUFROV 4588 | TUFROV 4599 | Sizing Comp. from Ex. 6 | Sizing Comp. from Ex. 6 |
| | | Nominal Fiber Diameter | 17 μ | 17 μ | 17 μ | 24 μ |
| **Extruder Conditions** | | **Units** | | | | |
| Feed Rate of Resin Mixture | | kg/h (1bs/hour) | 20.4 (45) | 20.9 (46) | 20.9 (46) | 20.9 (46) |
| # of Strands of Fiber Glass Roving | | | 8 | 8 | 7 | 4 |
| Screw Speed | | rpm | 90 | 90 | 90 | 90 |
| Zone 1-2 Temp. | | °C | 165 | 165 | 165 | 165 |
| Zone 3-4 Temp. | | °C | 190 | 190 | 190 | 190 |
| Zone 5-6 Temp. | | °C | 210 | 210 | 210 | 210 |
| Zone 7-8 Temp. | | °C | 250 | 250 | 250 | 250 |
| Die Temp. | | °C | 300 | 300 | 300 | 300 |
| **Property** | **Units (ISO)** | **ISO Method** | | | | |
| % Glass Content Flow Direction (Avg) | % | ISO 1172 | 30.7 | 32.6 | 31.3 | 29.1 |
| Fiber length (Avg) | mm | | 10.4 | 11.0 | 11.3 | 12.7 |
| Tensile Strength Flow Direction, Dry (Avg) | MPa | ISO 527-2 | 48.4 | 48.3 | 61.5 | 55.7 |

(continued)

| Property | Units (ISO) | ISO Method | | | | |
|---|---|---|---|---|---|---|
| Tensile Strength Cross Direction, Dry (Avg) | MPa | ISO 527-2 | 38.65 | 35.4 | 41.00 | 43.36 |
| Tensile Modulus Flow Direction, Dry (Avg) | MPa | ISO 527-2 | 5682.5 | 6387.5 | 6447.5 | 6095 |
| Tensile Modulus Cross Direction, Dry (Avg) | MPa | ISO 527-2 | 4837.5 | 4850 | 5050 | 4870 |
| Tensile Elongation at break, Flow Direction, Dry (Avg) | % | ISO 527-2 | 1.22 | 1.00 | 1.27 | 1.23 |
| Tensile Elongation at break, Cross Direction, Dry (Avg) | % | ISO 527-2 | 1.09 | 1.03 | 1.13 | 1.32 |
| Flexural Strength, Flow Direction | MPa | ISO 527-2 | 97.98 | 95.7 | 110.93 | 92.28 |
| Flexural Strength, Cross Direction | MPa | ISO 527-2 | 89.69 | 82.56 | 90.63 | 89.62 |
| Flexural Modulus, Flow Direction | MPa | ISO 527-2 | 2995 | 3117.5 | 3722.5 | 3235 |
| Flexural Modulus, Cross Direction | MPa | ISO 527-2 | 2830 | 2935 | 3607.5 | 3320 |

Table VI - D-LFT Composites (nominal 40% glass content)

| | | | **Comp. K** | **Comp. L** | **Comp. M** | **Comp. N** |
|---|---|---|---|---|---|---|
| | | | TUFROV 4588 | TUFROV 4599 | Sizing Comp. from Ex. 6 | Sizing Comp. from Ex. 6 |
| | | Nominal Fiber Diameter | 17 μ | 17 μ | 17 μ | 24 μ |
| **Extruder Conditions** | | **Units** | | | | |
| Feed Rate of Resin Mixture | | kg/h (1bs/hour) | 14.5 (32) | 14.5 (32) | 14.5 (32) | 13.6 (30) |
| # of Strands of Fiber Glass Roving | | | 7 | 8 | 8 | 4 |
| Screw Speed | | rpm | 90 | 90 | 90 | 90 |
| Zone 1-2 Temp. | | °C | 165 | 165 | 165 | 165 |
| Zone 3-4 Temp. | | °C | 190 | 190 | 190 | 190 |
| Zone 5-6 Temp. | | °C | 210 | 210 | 210 | 210 |
| Zone 7-8 Temp. | | °C | 250 | 250 | 250 | 250 |
| Die Temp. | | °C | 300 | 300 | 300 | 300 |

(continued)

| Extruder Conditions | | Units | | | | |
|---|---|---|---|---|---|---|
| **Property** | **Units (ISO)** | **ISO Method** | | | | |
| % Glass Content Flow Direction (Avg) | % | ISO 1172 | 38.6 | 41.4 | 39.9 | 39.2 |
| Fiber length (Avg) | mm | | 11.8 | 13.2 | | 11.1 |
| Tensile Strength Flow Direction, Dry (Avg) | MPa | ISO 527-2 | 60.8 | 64.8 | 63.5 | 69.4 |
| Tensile Strength Cross Direction, Dry (Avg) | MPa | ISO 527-2 | 51.14 | 46.49 | 62.84 | 62.21 |
| Tensile Modulus Flow Direction, Dry (Avg) | MPa | ISO 527-2 | 7100 | 7925 | 7182.5 | 7587.5 |
| Tensile Modulus Cross Direction, Dry (Avg) | MPa | ISO 527-2 | 5700 | 6015 | 6167.5 | 6680 |
| Tensile Elongation at break, Flow Direction, Dry (Avg) | % | ISO 527-2 | 1.10 | 1.10 | 1.22 | 1.25 |
| Tensile Elongation at break, Cross Direction, Dry (Avg) | % | ISO 527-2 | 1.33 | 1.08 | 1.34 | 1.37 |
| Flexural Strength, Flow Direction | MPa | ISO 527-2 | 108.6 | 105.3 | 127.6 | 109.1 |
| Flexural Strength, Cross Direction | MPa | ISO 527-2 | 108.1 | 87.44 | 103.37 | 107.98 |
| Flexural Modulus, Flow Direction | MPa | ISO 527-2 | 3800 | 3537.5 | 4347.5 | 4082.5 |
| Flexural Modulus, Cross Direction | MPa | ISO 527-2 | 4040 | 3820 | 3722.5 | 4330 |

While a number of observations can be made about the data in Tables V and VI, a few exemplary observations are noted. First, at a nominal glass content of 40%, composites comprising glass fibers at least partially coated with sizing compositions of the present invention (i.e., Composites N-P) have tensile strengths that are generally higher than the comparative composites. Further, Composites N-P have tensile strength values in the cross flow direction that are almost as high as the tensile strength values in the flow direction, suggesting good dispersability of the fibers within the resin. Composite P (24 micron diameter glass fibers) exhibited flexural strength values in the cross flow direction that are nearly the same as in the flow direction. Such isotropic properties can be beneficial to end users in designing composite parts because, for example, designs are possible that do not have to compensate the generally lower property values in the flow direction.

Desirable characteristics, which can be exhibited by embodiments of the present invention, can include, but are not limited to, providing sizing compositions comprising an acid-amine component having advantageous film forming properties thereby eliminating or reducing the amount of film former in the sizing composition; providing fiber glass strands coated with such sizing compositions which can exhibit reduced numbers of broken filaments and fuzz during processing conditions; providing fiber glass strands coated with sizing compositions that can be used in reinforcing composites; providing fiber glass strands coated with sizing compositions that can be used in long fiber thermoplastic applications; providing sizing compositions that can be used on relatively large diameter glass fibers in the reinforcement of composites; providing composites reinforced with relatively large diameter glass fibers having physical properties comparable to, or improved, relative to composites reinforced with smaller diameter fibers; and others.

## Claims

**1.** A fiber glass strand comprising:

at least one glass fiber at least partially coated with an aqueous sizing composition comprising an acid-amine component, the acid-amine component comprising molecules of at least one amine associated with molecules of at least one phosphorus-containing acid or sulfur-containing acid, wherein the molecules of the at least one amine are associated with the molecules of the at least one phosphorus-containing acid or sulfur-containing acid through Lewis acid-base interactions, and wherein the at least one glass fiber has a diameter of at least 21 μm.

**2.** A fiber glass strand comprising:

at least one glass fiber at least partially coated with an aqueous sizing composition comprising an acid-aminosilane component, the acid-aminosilane component comprising molecules of at least one aminosilane associated with molecules of at least one phosphorus-containing acid selected from Formula (I):

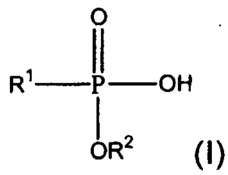
(I)

wherein $R^1$ is -alkyl, -alkenyl, -alkynyl, -cycloalkyl, -cycloalkenyl, - heterocycl, -aryl, or -heteroaryl and $R^2$ is -hydrogen, -alkyl, -alkenyl,-alkynyl, -cycloalkyl, -cycloalkenyl, -heterocycl, -aryl, or-heteroaryl, or (II):

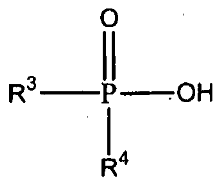
(II)

wherein $R^3$ and $R^4$ are independently selected from the group consisting of -hydrogen,-alkyl, -alkenyl, -alkynyl, -cycloalkyl, -cycloalkenyl, -heterocycl, - aryl, or -heteroaryl, and
wherein the at least one glass fiber has a diameter of at least 21 μm.

**3.** The fiber glass strand of claim 2, wherein the molar ratio of the at least one phosphorus-containing acid to the aminosilane is less than about 1.

**4.** The fiber glass strand of claim 1, wherein the phosphorus-containing acid comprises phosphorus acid, hypophosphorus acid, phosphonic acid, organophosphorus acids, or mixtures thereof.

**5.** The fiber glass strand of any of claims 1 or 2, wherein the at least one glass fiber has a diameter of up to about 35 μm.

**6.** The fiber glass strand of any of claims 1 or 2, wherein the at least one glass fiber has a diameter of at least about 22 μm.

**7.** The fiber glass strand of any of claims 1 or 2, wherein the nominal diameter of the at least one glass fiber is about 24 microns.

**8.** The fiber glass strand of any of claims 1 or 2, wherein the aqueous sizing composition further comprises at least one film former.

**9.** The fiber glass strand of claim 1, wherein the aqueous sizing composition further comprises at least one coupling agent.

**10.** A composite material comprising:

a polymeric resin; and
a plurality of glass fibers from the fiber glass strand of any of claims 1 or 2 disposed in the polymeric resin.

**11.** The composite material of claim 10, wherein the plurality of glass fibers are present in an amount up to about 90 weight percent of the composite material.

**12.** The composite material of claim 10, wherein the polymeric resin comprises a thermoplastic.

**13.** The composite material of claim 12, wherein the thermoplastic comprises a polyolefin, polyamide, polystyrene, polyphenylene oxide, polyester or copolymers or mixtures thereof.

**14.** The composite material of claim 10, wherein the polymeric resin comprises a thermoset.

**Patentansprüche**

**1.** Glasfaserstrang enthaltend:

mindestens eine Glasfaser, die mindestens teilweise mit einer wässrigen Schlichtezusammensetzung beschichtet ist, die eine Säure-Amin-Komponente enthält, wobei die Säure-Amin-Komponente Moleküle mindestens eines Amins, die mit Molekülen mindestens einer phosphorhaltigen Säure oder schwefelhaltigen Säure assoziiert sind, enthält, wobei die Moleküle des mindestens einen Amins mit den Molekülen der mindestens einen phosphorhaltigen Säure oder schwefelhaltigen Säure über Lewis-Base-Wechselwirkungen assoziiert sind und wobei die mindestens eine Glasfaser einen Durchmesser von mindestens 21 $\mu$m aufweist.

**2.** Glasfaserstrang enthaltend:

mindestens eine Glasfaser, die mindestens teilweise mit einer wässrigen Schlichtezusammensetzung beschichtet ist, die eine Säure-Aminosilan-Komponente enthält, wobei die Säure-Aminosilan-Komponente Moleküle mindestens eines Aminosilans, die mit Molekülen mindestens einer phosphorhaltigen Säure ausgewählt aus Formel (I)

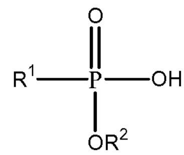

(I),

worin $R^1$ gleich -Alkyl, -Alkenyl, -Alkinyl, -Cycloalkyl, -Cycloalkenyl, -Heterocyclus, -Aryl oder -Heteroaryl ist und $R^2$ gleich -wasserstoff, -Alkyl, -Alkenyl, -Alkinyl, -Cycloalkyl, -Cycloalkenyl, -Heterocyclus, -Aryl oder -Heteroaryl ist,
oder (II)

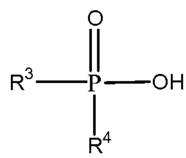

(II),

worin $R^3$ und $R^4$ jeweils unabhängig voneinander ausgewählt sind aus der Gruppe bestehend aus -Wasserstoff, -Alkyl, -Alkenyl, -Alkinyl, -Cycloalkyl, -Cycloalkenyl, -Heterocyclus, -Aryl oder -Heteroaryl, assoziiert sind, enthält, und
wobei die mindestens eine Glasfaser einen Durchmesser von mindestens 21 $\mu$m aufweist.

**3.** Glasfaserstrang nach Anspruch 2, wobei das Molverhältnis der mindestens einen phosphorhaltigen Säure zu dem Aminosilan weniger als etwa 1 beträgt.

**4.** Glasfaserstrang nach Anspruch 1, wobei die phosphorhaltige Säure Phosphorsäure, Hypophosphorsäure, Phosphonsäure, Organophosphorsäuren oder Mischungen davon enthält.

**5.** Glasfaserstrang nach einem der Ansprüche 1 oder 2, wobei die mindestens eine Glasfaser einen Durchmesser von bis zu etwa 35 μm hat.

**6.** Glasfaserstrang nach einem der Ansprüche 1 oder 2, wobei die mindestens eine Glasfaser einen Durchmesser von mindestens etwa 22 μm hat.

**7.** Glasfaserstrang nach einem der Ansprüche 1 oder 2, wobei der nominale Durchmesser der mindestens einen Glasfaser etwa 24 μm beträgt.

**8.** Glasfaserstrang nach einem der Ansprüche 1 oder 2, wobei die wässrige Schlichtezusammensetzung ferner mindestens einen Filmbildner enthält.

**9.** Glasfaserstrang nach Anspruch 1, wobei die wässrige Schlichtezusammensetzung ferner mindestens ein Kupplungsmittel enthält.

**10.** Verbundstoff, enthaltend:

ein polymeres Harz und
eine Vielzahl von Glasfasern aus dem Glasfaserstrang nach einem der Ansprüche 1 oder 2, die in dem polymeren Harz angeordnet sind.

**11.** Verbundstoff nach Anspruch 10, wobei die Vielzahl von Glasfasern in einer Menge von bis zu etwa 90 Gew.-% des Verbundstoffs vorhanden ist.

**12.** Verbundstoff nach Anspruch 10, wobei das polymere Harz einen Thermoplasten enthält.

**13.** Verbundmaterial nach Anspruch 12, wobei der Thermoplast ein Polyolefin, Polyamid, Polystyrol, Polyphenylenoxid, einen Polyester oder Copolymere oder Mischungen davon enthält.

**14.** Verbundstoff nach Anspruch 10, wobei das polymere Harz ein Duromer enthält.

**Revendications**

**1.** Fil en fibres de verre comprenant :

au moins une fibre de verre au moins partiellement revêtue d'une composition aqueuse d'encollage comprenant un composant acide-amine, le composant acide-amine comprenant des molécules d'au moins une amine associées avec des molécules d'au moins un acide contenant du phosphore ou un acide contenant du soufre, dans lequel les molécules de la au moins une amine sont associées avec les molécules du au moins un acide contenant du phosphore ou un acide contenant du soufre par des interactions acido-basiques de Lewis, et dans lequel la au moins une fibre de verre a un diamètre d'au moins 21 μm.

**2.** Fil en fibres de verre comprenant :

au moins une fibre de verre au moins partiellement revêtue d'une composition aqueuse d'encollage comprenant un composant acide-aminosilane, le composant acide-aminosilane comprenant des molécules d'au moins un aminosilane associées avec des molécules d'au moins un acide contenant du phosphore choisi parmi la formule (I) :

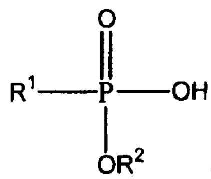
(I)

dans laquelle $R^1$ est un groupe -alkyle, -alcényle, -alcynyle, -cycloalkyle, -cycloalcényle, -hétérocyclyle, -aryle ou -hétéroaryle et $R^2$ et un atome d'hydrogène, un groupe -alkyle, -alcényle, -alcynyle, -cycloalkyle, -cycloalcényle, -hétérocyclyle, -aryle ou -hétéroaryle, ou (II) :

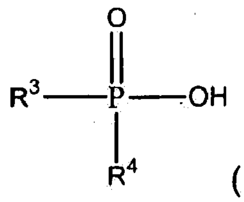

(II)

dans laquelle $R^3$ et $R^4$ sont choisis indépendamment dans le groupe constitué d'un atome d'hydrogène, d'un groupe -alkyle, -alcényle, -alcynyle, -cycloalkyle,-cycloalcényle, -hétérocyclyle, -aryle ou -hétéroaryle, et dans lequel la au moins une fibre de verre a un diamètre d'au moins 21 μm.

**3.** Fil en fibres de verre selon la revendication 2, dans lequel le rapport molaire du au moins un acide contenant du phosphore à l'aminosilane est inférieur à environ 1.

**4.** Fil en fibres de verre selon la revendication 1, dans lequel l'acide contenant du phosphore comprend l'acide phosphoreux, l'acide hypophosphoreux, l'acide phosphonique, les acides organo-phosphoreux, ou les mélanges de ceux-ci.

**5.** Fil en fibres de verre selon l'une quelconque des revendications 1 ou 2, dans lequel la au moins une fibre de verre a un diamètre allant jusqu'à environ 35 μm.

**6.** Fil en fibres de verre selon l'une quelconque des revendications 1 ou 2, dans lequel la au moins une fibre de verre a un diamètre d'au moins environ 22 μm.

**7.** Fil en fibres de verre selon l'une quelconque des revendications 1 ou 2, dans lequel le diamètre nominal de la au moins une fibre de verre est d'environ 24 microns.

**8.** Fil en fibres de verre selon l'une quelconque des revendications 1 ou 2, dans lequel la composition aqueuse d'encollage comprend en outre au moins un agent filmogène.

**9.** Fil en fibres de verre selon la revendication 1, dans lequel la composition aqueuse d'encollage comprend en outre au moins un agent de couplage.

**10.** Matériau composite comprenant :

une résine polymère ; et
une pluralité de fibres de verre provenant du fil en fibres de verre selon l'une quelconque des revendications 1 ou 2 placée dans la résine polymère.

**11.** Matériau composite selon la revendication 10, dans lequel la pluralité de fibres de verre est présente en une quantité allant jusqu'à environ 90 pour cent en poids du matériau composite.

**12.** Matériau composite selon la revendication 10, dans lequel la résine polymère comprend une résine thermoplastique.

**13.** Matériau composite selon la revendication 12, dans lequel la résine thermoplastique comprend une polyoléfine, un polyamide, un polystyrène, un poly(oxyde de phénylène), un polyester ou des copolymères ou des mélanges de ceux-ci.

**14.** Matériau composite selon la revendication 10, dans lequel la résine polymère comprend une résine thermodurcissable.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009062137 A
- US 6207737 B, Schell
- US 3416990 A
- US 3437550 A
- US 3483276 A
- US 5130197 A